# EUROPEAN PATENT APPLICATION

(11) **EP 4 339 866 A1**
(43) Date of publication of application: **20.03.2024**
(21) Application number: 23196537.7
(22) Date of filing: 11.09.2023
(51) Int. Cl.: G06Q 10/20, B60C 11/24, B60C 23/00, G06Q 10/30, G06Q 50/40

(54) **TIRE MAINTENANCE SUPPORT APPARATUS AND TIRE MAINTENANCE SUPPORT SYSTEM**

(30) Priority: 13.09.2022 JP 2022145364
(71) Applicant: Toyo Tire Corporation, Itami-shi, Hyogo 664-0847 (JP)
(72) Inventor: Tsuchimoto, Masashi, Hyogo 6640847 (JP); Kuritani, Koutarou, Hyogo 6640847 (JP)
(74) Representative: Müller-Boré & Partner Patentanwälte PartG mbB

(57) **Abstract**

A tire maintenance support apparatus (100) includes: a tire information acquisition unit (31), a replacement time calculation unit (32), and a replacement count calculation unit (33). The tire information acquisition unit (31) acquires prediction data for groove depth of a tire (7) mounted on each of a plurality of vehicles operated and managed. The replacement time calculation unit (32) calculates a time of replacement of each tire (7) based on the prediction data for groove depth acquired by the tire information acquisition unit (31). The replacement count calculation unit (33) calculates the number of tire replacements in each period of time by tallying times of replacement calculated by the replacement time calculation unit (32) for each period of time.

## Description

The present invention relates to a tire maintenance support apparatus and a tire maintenance support program that support the maintenance of tires mounted on a vehicle.

Generally, a tire wears depending on the traveling condition, travel distance, etc. The wear amount varies depending on the axle position at which the tire is mounted. When the remaining groove amount defined as a depth of a groove provided in the tire becomes equal to or less than a predetermined amount, maintenance such as replacement becomes necessary.

Patent literature 1 discloses a related-art tire management method. The tire management server used in this tire management method is connected to a vehicle terminal, a vehicle management terminal, and a dealer terminal via a communication network. The tire management server receives data indicating the condition of tires from the vehicle terminal or the dealer terminal, determines the condition of the tires based on this data, and, if it is determined to be necessary to deal with a tire urgently, communicates the tire condition to the relevant vehicle terminal or the dealer terminal of the dealer that can deal with the condition. If it is determined to be necessary to deal with a tire but that there is no urgency, the tire management server processes scheduling of the vehicle management terminal of the relevant vehicle and the dealer terminal of the designated dealer.

[Patent Literature 1] Japanese Patent Application Publication No. 2002-132994

The tire management method described in Patent literature 1 displays the tire condition in the vehicle terminal mounted on individual vehicles. Incidentally, it is challenging for transport companies, etc. that own, operate, and manage a plurality of vehicles for transportation such as trucks to fully formulate plans for budget for managing maintenance cost, etc. because the timing of maintenance such as tire replacement in the plurality of vehicles they manage is unpredictable. We have thought that, in formulating a plan for maintenance of tires in a plurality of vehicles operated and managed, it is possible to improve the work of formulating a maintenance plan by predicting the maintenance timing from the maintenance information on the tires mounted on the respective vehicles.

The present invention addresses the issue described above, and a purpose thereof is to provide a tire maintenance support apparatus and a tire maintenance support program that can calculate the number of tire replacements and increase the work efficiency of maintenance planning.

A tire maintenance support apparatus according to an aspect of the present invention includes: a tire information acquisition unit that acquires prediction data for remaining groove amount of a tire mounted on each of a plurality of vehicles operated and managed; a replacement time calculation unit that calculates a time of replacement of each tire based on the prediction data for remaining groove amount acquired by the tire information acquisition unit; and a replacement count calculation unit that calculates the number of tire replacements in each period of time by tallying times of replacement calculated by the replacement time calculation unit for each period of time on a time axis.

Another aspect of the present invention relates to a tire maintenance support program. The tire maintenance support program includes computer-implemented modules including: a module that acquires prediction data for remaining groove amount of a tire mounted on each of a plurality of vehicles operated and managed; a module that calculates a time of replacement of each tire based on the prediction data for remaining groove amount acquired by the tire information acquisition unit; and a module that calculates the number of tire replacements in each period of time by tallying times of replacement calculated by the replacement time calculation unit for each period of time on a time axis.

According to the present invention, the number of tire replacements can be calculated and the work efficiency of maintenance planning can be increased.
Fig. 1 is a block diagram showing a configuration of a maintenance support system according to the embodiment including a tire maintenance support apparatus;
Fig. 2 is a block diagram showing a functional configuration of the tire management server;
Fig. 3 is a schematic chart illustrating wear amount estimation and learning in the arithmetic model;
Fig. 4 is a block diagram showing a functional configuration of the tire maintenance support apparatus;
Fig. 5 is a flowchart showing a sequence of steps performed by the tire maintenance support apparatus to display the number of tire replacements;
Fig. 6 is a schematic diagram showing an example of the axle arrangement information and the tire remaining groove amount data; and
Fig. 7 is a schematic diagram showing an example of display of the number of tire replacements by the display processing unit.

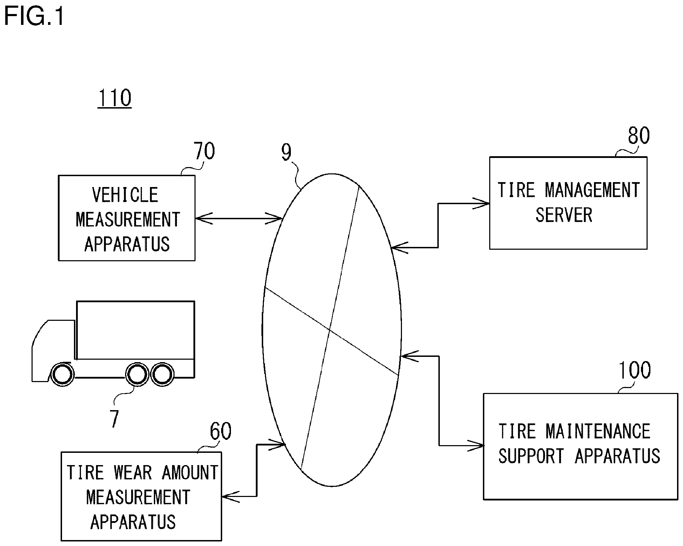

Hereinafter, the invention will be described based on a preferred embodiment with reference to Figs. 1 through 7. Identical or like constituting elements and members shown in the drawings are represented by identical symbols and a duplicate description will be omitted as appropriate. The dimension of members in the drawings shall be enlarged or reduced as appropriate to facilitate understanding. Those of the members that are not important in describing the embodiment are omitted from the drawings.

(Embodiment) Fig. 1 is a block diagram showing a configuration of a maintenance support system 110 according to the embodiment including a tire maintenance support apparatus 100. The maintenance support system 110 includes a tire wear amount measurement apparatus 60, a vehicle-mounted measurement apparatus 70, a tire management server 80, and a tire maintenance support apparatus 100. The tire maintenance support apparatus 100 acquires, from the tire management server 80, information on the maintenance of tires 7 mounted on a plurality of vehicles operated and managed. The tire maintenance support apparatus 100 provides information such as the time when tire replacement will be necessary to the worker. In the following description, the information on the maintenance of the tire 7 shall be referred to as maintenance information.

The tire 7 is mounted on a plurality of vehicles such as transport trucks operated under the management of, for example, a transport company. The transport company can know maintenance information on the tire 7 provided by the tire maintenance support apparatus 100 for the plurality of tires 7 mounted on the respective vehicles. The maintenance information on the tire 7 includes, for example, prediction data for remaining groove amount of the tire 7, temporal change of inflation pressure data for the tire 7, and tire load data based on at least one of the inflation pressure or temperature of the tire 7.

The tire wear amount measurement apparatus 60 directly measures the depth of a groove provided in the tread of the tire 7 a plurality of times during a predetermined period of time (several months to several years) and acquires the wear amount of the tire 7. The tire wear amount measurement apparatus 60 transmits the data for measured wear amount of the tire 7 to the tire management server 80 via a communication network 9. The tire worker may measure the depth of each groove by a measuring instrument, a camera, visual inspection, etc., and the tire wear amount measurement apparatus 60 may store measurement data input by the worker. Alternatively, the tire wear amount measurement apparatus 60 may be a dedicated apparatus for measuring the depth of a groove by a mechanical or optical method and storing the wear amount.

Specifically, given that there are four grooves, for example, the tire wear amount measurement apparatus 60 measures the amount at four locations in the width direction and further measures the amount at three locations in the circumferential direction of the same groove at an interval of, for example, 120°. This causes uneven wear amount data in the width direction or circumferential direction of the tire to be also stored in the tire wear amount measurement apparatus 60. Since the diameter may change due to tire wear, the tire wear amount measurement apparatus 60 may indirectly measure the depth of a groove by calculation from the travel distance and information on the revolutions and speed of the tire. In addition, direct measurement of the depth of a groove and calculation-based prediction of the depth from the travel distance and information on the revolutions and speed of the tire may be used in combination. The term of the groove depth of the tire 7 includes the remaining groove amount, the amount of wear, and the wear rate, etc. of the tire 7.

The vehicle-mounted measurement apparatus 70 is mounted on a vehicle, has a pressure sensor, a temperature sensor, etc. provided in the tire 7, and measures the inflation pressure and temperature of the tire 7. The temperature sensor and the pressure sensor are provided in the air valve, etc. of the tire 7 mounted on the vehicle or are firmly wound around and secured to the wheel by a belt, etc. The temperature sensor may be provided in the inner liner of the tire 7, etc. The vehicle-mounted measurement apparatus 70 transmits data for inflation pressure, temperature, etc. of the tire 7 to the tire management server 80 via the communication network 9.

Further, the vehicle-mounted measurement apparatus 70 measures the speed of the vehicle, the current position information (latitude, longitude, and altitude) on the vehicle, the acceleration in the three axial directions of the vehicle, etc. by a speed meter, a GPS receiver, an acceleration sensor, etc. mounted on the vehicle. The vehicle-mounted measurement apparatus 70 transmits data such as vehicle speed, vehicle position information, and vehicle acceleration to the tire management server 80 via the communication network 9.

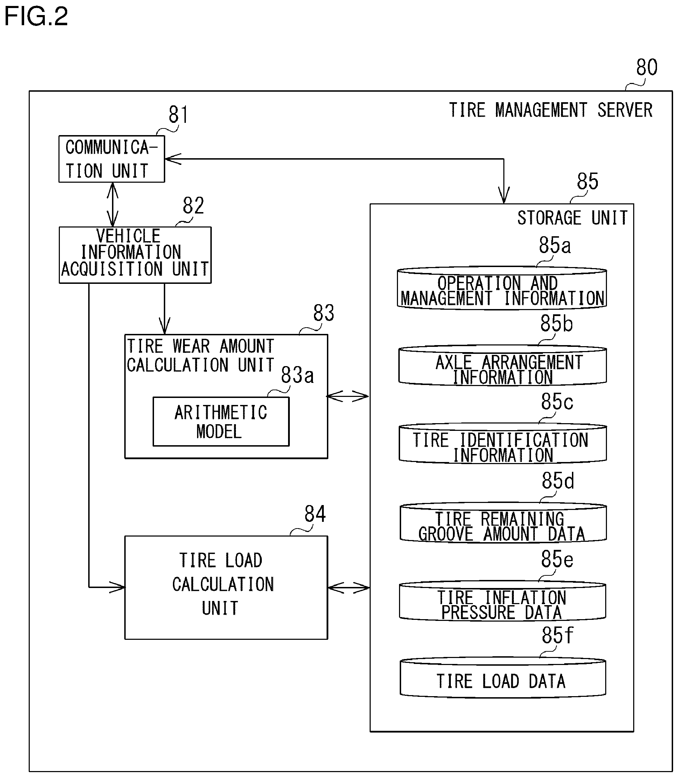

Fig. 2 is a block diagram showing a functional configuration of the tire management server 80. The tire management server 80 includes a communication unit 81, a vehicle information acquisition unit 82, a tire wear amount calculation unit 83, a tire load calculation unit 84, and a storage unit 85. The units in the tire management server 80 can be implemented in hardware such as an electronic element exemplified by a CPU of a computer and a mechanical component, and in software such as a computer program. Fig. 2 depicts functional blocks implemented by the cooperation of these units. Accordingly, those skilled in the art will understand that these functional blocks can be realized in various forms by a combination of hardware and software.

The communication unit 81 is communicably connected to the communication network 9 by wireless or wired communication connection and communicates with the tire wear amount measurement apparatus 60, the vehicle-mounted measurement apparatus 70, and the tire maintenance support apparatus 100.

The vehicle information acquisition unit 82 acquires, via the communication unit 81, vehicle measurement information such as speed and position information on the vehicle and tire measurement information such as inflation pressure and temperature measured in the tire 7 from the vehicle-mounted measurement apparatus 70. Further, the vehicle information acquisition unit 82 acquires measurement data for wear amount of the tire 7 measured by the tire wear amount measurement apparatus 60 via the communication unit 81.

The vehicle information acquisition unit 82 can calculate and acquire the travel distance based on the position information in the vehicle measurement information. Further, the travel distance of the vehicle may be calculated based on the speed data in the vehicle measurement information and the time data associated with the speed data. In other words, the travel distance of the vehicle can be calculated by multiplying the speed data arranged in a time sequence by the time difference elapsed until the next point of time. When the information on travel distance of the vehicle is provided from the vehicle or an external apparatus, etc. for vehicle management, the vehicle information acquisition unit 82 need not calculate the travel distance on its own and may acquire information on the travel distance from the vehicle or the external apparatus.

The vehicle information acquisition unit 82 outputs the travel distance of the vehicle and the tire measurement information (temperature, inflation pressure, etc. of the tire) acquired to the tire wear amount calculation unit 83. In the case the tire wear amount calculation unit 83 estimates the wear amount of the tire based on an arithmetic model that uses the acceleration of the vehicle as an input element, the vehicle information acquisition unit 82 outputs the acceleration data in the vehicle measurement information to the tire wear amount calculation unit 83.

The storage unit 85 is a storage apparatus comprised of, for example, a solid state drive (SSD), a hard disk, a CD-ROM, a DVD, etc. The storage unit 85 stores operation management information 85a, axle arrangement information 85b, tire identification information 85c, tire remaining groove amount data 85d, tire inflation pressure data 85e, tire load data 85f, data provided in advance as relating to specifications of various vehicles and tires 7, etc.

The operation management information 85a represents information related to a plurality of vehicles operated under the management of, for example, a transport company and includes the name of the vehicle, identification information on the vehicle assigned to each vehicle, etc. It is assumed that the storage unit 85 stores the operation management information 85a organized into groups each comprised of a plurality of transport companies. The axle arrangement information 85b represents information for each vehicle indicating the position of the axle and the tire 7 that is mounted.

The tire identification information 85c comprises information such as a serial number assigned to each tire 7. For example, it is assumed that the tire identification information is readably stored in an RFID built in the tire 7. The tire identification information may be stored in the storage unit 85 in association with the vehicle that the tire 7 is mounted on and the position of the axle in the vehicle that the tire 7 is mounted on.

The tire remaining groove amount data 85d represents data for remaining amount of tire groove depth obtained by subtracting the tire wear amount estimated by the tire wear amount calculation unit 83 and data for remaining amount of the tire groove depth obtained by subtracting the wear amount of the tire 7 periodically measured by the tire wear amount measurement apparatus 60. The tire remaining groove amount data 85d includes data calculated in the past by the tire wear amount calculation unit 83 and data calculated as a value predicted in the future using the average values of the travel distance and of the inflation pressure and temperature of the tire 7.

The tire inflation pressure data 85e includes the temporal change of the past inflation pressure data for the tire 7 measured by the vehicle-mounted measurement apparatus 70. As will be described later, the tire load data 85f is calculated by the tire load calculation unit 84 based on at least one of the inflation pressure or the temperature of the tire 7 and is stored in the storage unit 85.

The tire wear amount calculation unit 83 reads and acquires data appropriately used for estimation of the wear amount of the tire 7 (e.g., vehicle and tire specification data) from the storage unit 85. The tire wear amount calculation unit 83 acquires information such as the axle arrangement information 85b and the tire identification information 85c stored in the storage unit 85. The tire specification includes information such as tire size, tire width, tire profile, tire strength, static rigidity, dynamic rigidity, tire outer diameter, road index, anti-wear performance, rolling resistance performance, fuel-efficient tire, manufacturer information, etc.

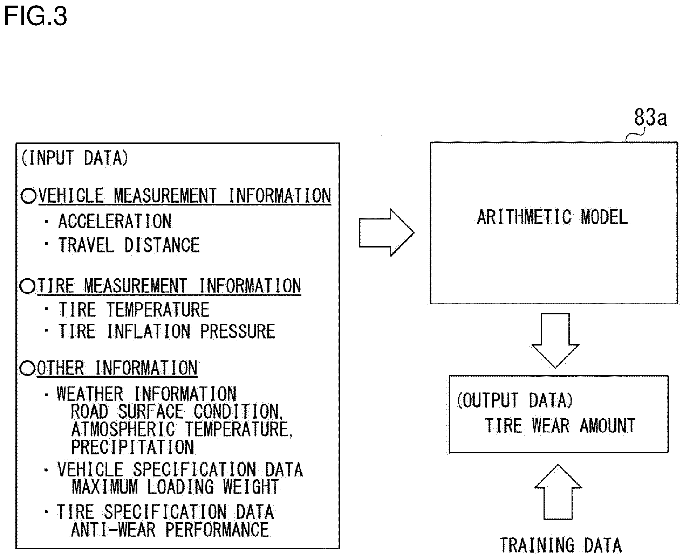

The tire wear amount calculation unit 83 includes an arithmetic model 83a and estimates the wear amount of the tire 7. The arithmetic model 83a is a learning-type model for calculating the wear amount of the tire 7 based on the input information. Fig. 3 is a schematic chart illustrating wear amount estimation and learning in the arithmetic model 83a. The input data input to the arithmetic model 83a is generally categorized into groups of vehicle measurement information, tire measurement information, and other information.

The input data related to vehicle measurement information includes the acceleration and travel distance of the vehicle. The travel distance is acquired by the vehicle information acquisition unit 82 as described above. The input data related to tire measurement information includes the inflation pressure and temperature of the tire 7. It will be assumed that the acceleration of the vehicle is used as input data input to the arithmetic model 83a as appropriate.

The input data comprising other information includes the road surface condition estimated based on the weather information, maximum loading weight of the vehicle included in the vehicle specification data, anti-wear performance of the tire 7 included in the tire specification data, etc. Tire wear index values, etc. derived from turning the anti-wear performance of different tread compositions into indices based on Lambourn abrasion tests, with the standard composition being defined as 100, are used to represent the anti-wear performance of the tire 7.

A learning-type model such as a neural network is used as the arithmetic model 83a. The arithmetic model 83a is built by using a scheme such as a deep neural network (DNN) and a decision tree. Alternatively, the arithmetic model 83a may be built as a multiple linear regression model built in response to input information and may be generated by being trained.

The data wear amount of the tire 7 measured by the tire wear amount measurement apparatus 60 is used as training data to train the arithmetic model 83a. In the process of training the arithmetic operation model 83a, the wear amount of the tire 7 as output data is estimated by the arithmetic operation model 83a based on input information, and the estimated data is compared with the training data. The arithmetic model 83a compares the wear amount of the tire 7 estimated with the training data and newly sets, in the arithmetic model 83a, various coefficients in the arithmetic steps such as weighting. The arithmetic operation model 83a is trained by repeatedly updating the model.

The tire wear amount calculation unit 83 estimates the wear amount of the tire 7 by using the trained arithmetic model 83a and collects the remaining amount of tire groove depth derived from subtracting the wear amount of the tire 7 in the tire storage unit 85 as the tire remaining amount data 85d.

When the inflation pressure of the tire 7 is lower than a predetermined threshold value and when the temperature of the tire 7 is higher than a predetermined threshold value, the tire load calculation unit 84 calculates the tire load amount by multiplying each of the inflation pressure and the temperature by the travel distance of the vehicle and integrating the product and stores the result in the storage unit 85 as the tire load data 85f. The tire load calculation unit 84 may calculate the tire load amount using at least one of the inflation pressure or the temperature of the tire 7.

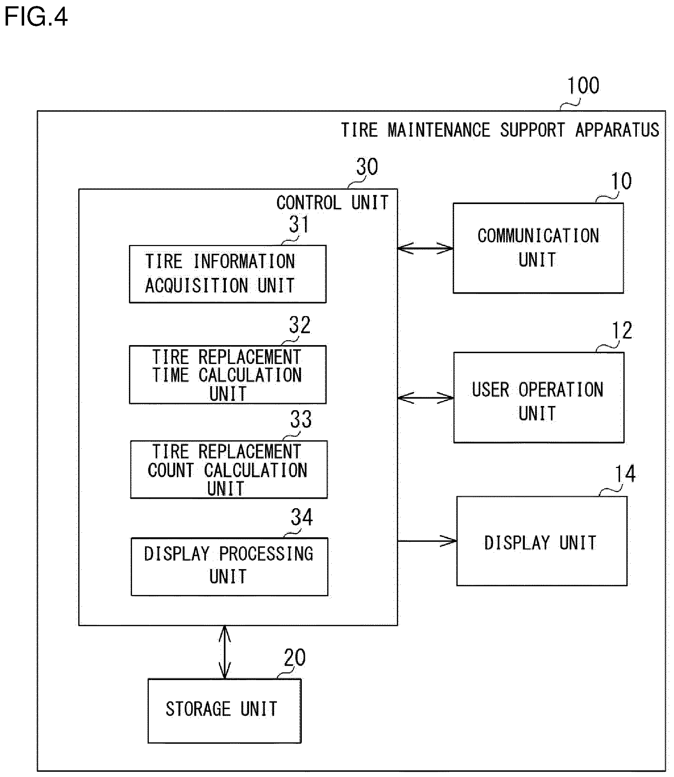

Fig. 4 is a block diagram showing a functional configuration of the tire maintenance support apparatus 100. The tire maintenance support apparatus 100 includes a communication unit 10, a user operation unit 12, a display unit 14, a storage unit 20, and a control unit 30, and predicts the number replacement of the tires 7 in the future and provides the number to the worker.

The units in the tire maintenance support apparatus 100 can be implemented in hardware such as an electronic element exemplified by a CPU of a computer and a mechanical component, and in software such as a computer program. Fig. 4 depicts functional blocks implemented by the cooperation of these units. Accordingly, those skilled in the art will understand that these functional blocks can be realized in various forms by a combination of hardware and software.

The communication unit 10 is communicably connected to the communication network 9 by wireless or wired communication connection and communicates with the tire management server 80. The user operation unit 12 is a controllable input apparatus such as a touch panel, a switch, a keyboard, and a mouse. The display unit 14 is a display apparatus such as a liquid crystal display.

By using the user operation unit 12, the worker can acquire maintenance information on the tire 7 from the tire management server 80, can estimate the number of replacements of the tire 7 and the associated cost during a predetermined period of time such as a year and half a year or within a specified period of time, and can cause the display unit 14 to display the estimation. The tire maintenance support apparatus 100 may cause the display unit 14 to display the minimum number of tire replacements that will result by using the tires in rotation in each vehicle. Tire rotation is not limited to rotation confined to a given vehicle. In the case of rotating tires between a vehicle traveling on a highway and a vehicle traveling only on a general road, for example, rotation may be performed between a plurality of vehicles. In addition to the number of replacements and the cost associated with the tire 7 currently mounted on the vehicle, the number of replacements and the cost associated with the tire having a different specification may be displayed in parallel. For example, the number of replacements by tire B less expensive and having a lower rolling resistance than currently mounted tire A may be displayed side by side with the number of replacements and the cost associated with tire A. In that process, the amount of fuel reduced, fuel cost reduced, amount of carbon dioxide emission reduced, etc. that result when the tire is replaced may be displayed.

The storage unit 20 is a storage apparatus comprised of, for example, a solid state drive (SSD), a hard disk, a CD-ROM, a DVD, etc. The storage unit 20 stores a computer program executed in the control unit 30 and axle arrangement information on the vehicle, tire maintenance information on the tire 7 acquired from the tire management server 80, etc. The axle arrangement information on the vehicle is predefined according to, for example, the vehicle name, vehicle model, etc. and may be stored in the storage unit 20.

The control unit 30 includes a tire information acquisition unit 31, a replacement time calculation unit 32, a replacement count calculation unit 33, and a display processing unit 34. For example, the tire information acquisition unit 31 acquires, from the tire management server 80, maintenance information on the tires 7 mounted on a plurality of vehicles operated under the management of one transport company selected from a plurality of transport companies by a user operation of the worker in the user operation unit 12. The tire information acquisition unit 31 acquires tire remaining groove amount data 85d of each tire 7 mounted on the vehicle as maintenance information on the tire 7.

The replacement time calculation unit 32 estimates and calculates the time of replacement of the tire 7 based on the maintenance information on the tire 7 acquired by the tire information acquisition unit 31. The replacement time calculation unit 32 calculates the time when the remaining groove amount that requires tire replacement is equal to or less than a threshold value based on the prediction data for remaining groove amount in the tire remaining groove amount data 85d. The replacement time calculation unit 32 may calculate the time of replacement of the tire 7 with a margin so that the time of replacement is before the timing of the remaining groove amount becomes equal to or less than the threshold value.

The replacement count calculation unit 33 calculates the number of tire replacements in each period of time by tallying the times of replacement calculated by the replacement time calculation unit 32 for each predetermined period of time on the time axis. The predetermined period of time in which to calculate the number of tire replacements is, for example, 1 month, 3 months, and the like. The replacement count calculation unit 33 may calculate the maintenance cost (replacement cost) incurred in each period of time based on the calculated number of tire replacements. The replacement cost incurred when the tire is replaced is calculated by also allowing for the purchase cost of a new tire, disposal cost of an old tire, labor cost for tire replacement work, etc. When the replacement work is performed at a time other than the time when replacement of summer tires by winter tires takes place intensively, for example, the replacement count calculation unit 33 may calculate the cost by subtracting the purchase cost of a new tire, disposal cost of an old tire, labor cost for tire replacement work, etc.

The display processing unit 34 displays, on the display unit 14, the numbers of tire replacements calculated by the replacement count calculation unit 33, organizing the numbers according to the period of time. The display processing unit 34 may also display, on the display unit 14, the replacement cost incurred in each period of time calculated by the replacement count calculation unit 33. Further, the display processing unit 34 may display, on the display unit 14, the identification information on the vehicle on which the tire 7 for which the time of replacement has been calculated by the replacement time calculation unit and the position in the axle arrangement.

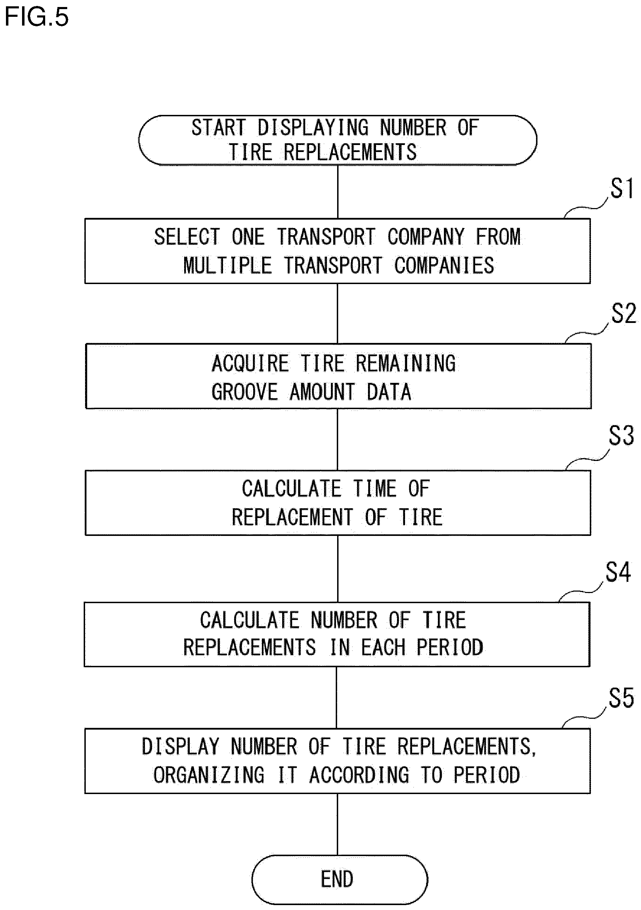

A description will now be given of the operation of the tire maintenance support apparatus 100. Fig. 5 is a flowchart showing a sequence of steps performed by the tire maintenance support apparatus 100 to display the number of tire replacements. The tire information acquisition unit 31 of the tire maintenance support apparatus 100 selects one transport company from a plurality of transport companies based on the worker's user operation in the user operation unit 12 (S1). The tire information acquisition unit 31 communicates, to the tire management server 80, the identification information on the selected transport company via the communication unit 10.

The tire management server 80 transmits, via the communication network 9, the tire remaining groove amount data 85d for the tires 7 mounted on all vehicles operated under the management of the transport company based on the communicated identification information on the transport company. The tire information acquisition unit 31 receives and acquires the tire remaining groove amount data 85d transmitted by the tire management server 80 (S2).

The replacement time calculation unit 32 estimates and calculates the time of replacement of the tire 7 based on the tire remaining groove amount data 85d for the tire 7 acquired in step S2 (S3). The replacement count calculation unit 33 calculates the number of tire replacements in each period of time by tallying the times of replacement calculated in step S3 for each predetermined period of time on the time axis (S4). The display processing unit 34 displays, on the display unit 14, the numbers of tire replacements calculated in step S4, organizing the numbers according to the period of time (S5) and terminates the process.

In step S4, the replacement count calculation unit 33 may calculate the replacement cost corresponding to the number of tire replacements for each period of time. In step S5, the display processing unit 34 may organize the replacement cost according to the period of time and display the cost on the display unit 14. Further, in step S5, the display processing unit 34 may display, on the display unit 14, the identification information on the vehicle on which the tire 7 is mounted and the position in the axle arrangement.

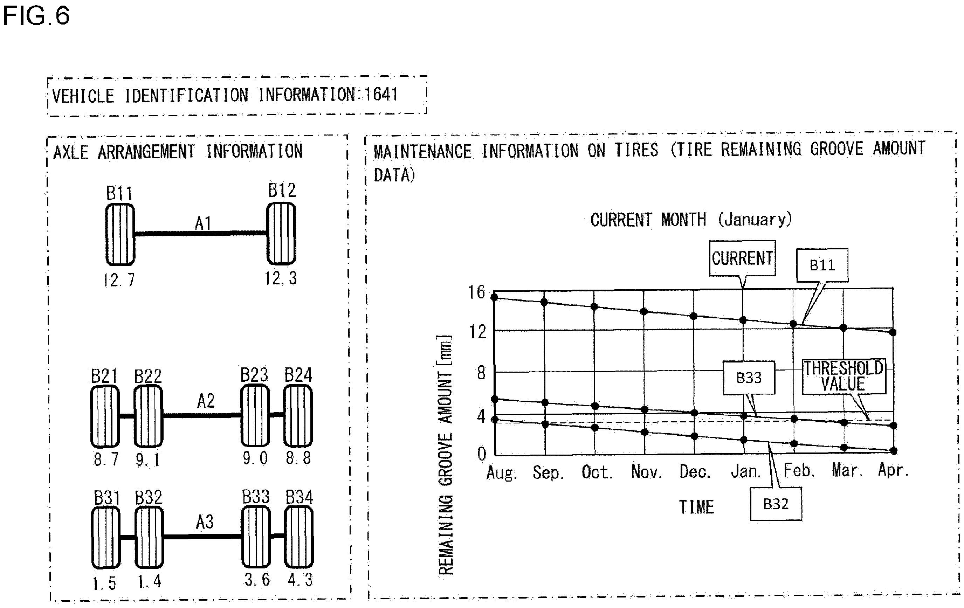

Fig. 6 is a schematic diagram showing an example of the axle arrangement information and the tire remaining groove amount data 85d. In the example shown in Fig. 6, the axle arrangement information 85b shows three axles A1, A2, and A3 in the longitudinal direction of a vehicle and tire positions B11, B12, etc. of the tires mounted in the respective axles. The axle arrangement information 85b shown in Fig. 6 numerically indicates the minimum value of the remaining groove amount in the plurality of grooves of each tire. For example, the minimum value of the current remaining groove amount in the tire at tire position B11 is 12.7 mm.

In Fig. 6, past data and future prediction data with respect to the present point of time are shown as the tire remaining groove amount data 85d for the tires at tire positions B11, B32, and B33. In addition, the threshold value of the remaining groove amount that requires tire replacement is displayed as a dashed line.

In the example shown in Fig. 6, it is known that the time of replacement of the tire at position B11 is still further in the future, the tire at position B33 needs to be replaced after 1 month, and the tire at position B32 should be replaced immediately. The replacement time calculation unit 32 calculates the time of replacement to be after 1 month for the tire at position B33 and to be after 0 months for the tire at position B32. The replacement time calculation unit 32 calculates the time of replacement of the tires 7 mounted on all vehicles operated under the management of the transport company.

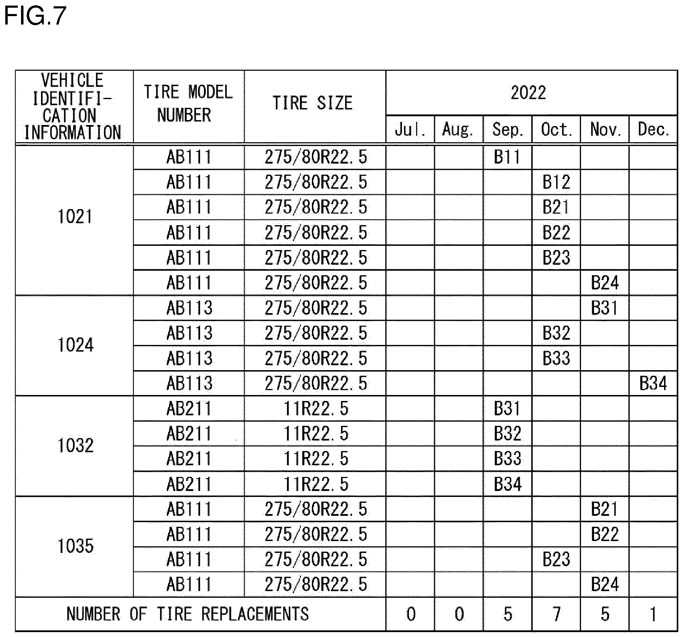

Fig. 7 is a schematic diagram showing an example of display of the number of tire replacements by the display processing unit 34. Fig. 7 shows the number of tire replacements tallied for each month from July to December 2022 in the bottom row. The example shown in Fig. 7 includes information such as vehicle identification number, tire size, and tire position in the axle arrangement.

The reference numerals B11, B22, etc. in the table of Fig. 7 represent tire positions in the axle arrangement as in the case of the axle arrangement information 85b shown in Fig. 6. Fig. 7 shows the number of tire replacements over a 6-month period, but the display may be switched according to the worker's user operation in the user operation unit 12 to show the number of tire replacements over a 1-year period, a 2-year period, etc.

The tire maintenance support apparatus 100 can calculate the number of tire replacements for each period of time and increase the work efficiency of maintenance planning, by tallying the times of replacement calculated by the replacement time calculation unit 32 for each predetermined period of time on the time axis. Further, the tire maintenance support apparatus 100 can facilitate formulation of a budget plan for managing the cost, etc. by calculating, in the replacement count calculation unit 33, the replacement cost corresponding to the number of tire replacements for each period of time.

By displaying, on the display unit 14, the numbers of tire replacements required, organizing the numbers according to the period of time, the tire maintenance support apparatus 100 can let the worker or the operation manager of the transport company know easily how many tire replacements are needed and at what point of time in the future.

By displaying the identification information on the vehicle on which the tire 7 for which the time of replacement has been calculated is mounted and the position in the axle arrangement, the display processing unit 34 can let the worker know easily the information on the tire for which replacement is necessary.

(Variation) In the above-described embodiment, the tire maintenance support apparatus 100 calculates the number of tire replacements using the tire remaining groove amount data 85d. The tire maintenance support apparatus 100 may use the tire information acquisition unit 31 to acquire tire inflation pressure data 85e and the tire load data 85f from the tire management server 80 and may use the replacement time calculation unit 32 to calculate the number of tire replacements by using prediction data for inflation pressure and load amount of the tire 7 in the future. For example, the tire inflation pressure and tire load amount in the future can be calculated and predicted based on the current tire inflation pressure increase-decrease rate, the trend of tire temperature change (including seasonal factors), the average value per period of vehicle travel distance, etc. The tire inflation pressure and tire load amount in the future may be calculated by the tire load calculation unit 84 of the tire management server 80 or may be calculated by the replacement time calculation unit 32 of the tire maintenance support apparatus 100.

In this case, the tire maintenance support apparatus 100 may display, on display unit 14, the number of tire replacements and the associated cost based on the amount of load (the tire load data 85f) on the tire in the selected vehicle and the number of tire replacements and the associated cost based on the average amount of load on the tires in the vehicles in the transport company. By providing such information using the tire maintenance support apparatus 100, the difference in the number of replacements between vehicles can be known, and the number of tire replacements and the associated cost can be reduced by providing driving guidance to drivers who drive vehicles for which the number of tire replacements and the associated cost are large.

The display processing unit 34 of the tire maintenance support apparatus 100 is configured to display the number of tire replacements as shown in Fig. 7 but may be configured to display the axle arrangement information 85b, the tire remaining groove amount data 85d, the tire inflation pressure data 85e, and the tire load data 85f.

A description will now be given of the feature of the tire maintenance support apparatus 100 and the tire maintenance support program according to the embodiment. The tire maintenance support apparatus 100 includes the tire information acquisition unit 31, the replacement time calculation unit 32, the replacement count calculation unit 33, and the display processing unit 34. The tire information acquisition unit 31 acquires prediction data for remaining groove amount of the tire 7 mounted on each of a plurality of vehicles that are operated and managed. The replacement time calculation unit 32 calculates the time of replacement of each tire 7 from the prediction data for remaining groove amount acquired by the tire information acquisition unit 31. The replacement count calculation unit 33 calculates the number of tire replacements in each period of time by tallying the times of replacement calculated by the replacement time calculation unit 32 for each predetermined period of time on the time axis. Thereby, the tire maintenance support apparatus 100 can calculate the number of tire replacements for each period of time and increase the work efficiency of maintenance planning.

Further, the replacement count calculation unit 33 calculates the replacement cost corresponding to the number of tire replacements tallied for each period of time. In this way, the tire maintenance support apparatus 100 can facilitate formulation of a budget plan for managing the cost, etc.

The display processing unit 34 is further provided to display, on the display unit 14, the numbers of tire replacements calculated by the replacement count calculation unit 33, organizing the numbers according to the period of time. Thereby, the tire maintenance support apparatus 100 can let the worker know easily how many tire replacements are needed and at what point of time in the future.

Further, the display processing unit 34 displays the identification information on the vehicle on which the tire 7, for which the time of replacement has been calculated by the replacement time calculation unit 32, and the position in the axle arrangement. Thereby, the tire maintenance support apparatus 100 can let the worker know easily the information on the tire 7 for which replacement is necessary.

The tire information acquisition unit 31 acquires information related to the amount of load on the tire 7. The replacement time calculation unit 32 calculates the time of replacement of each tire 7 from the prediction data on the load amount acquired by the tire information acquisition unit 31. Thereby, the tire maintenance support apparatus 100 can calculate the number of tire replacements based on the information related to the amount of load on the tire 7 and increase the work efficiency of maintenance planning.

The tire maintenance program support program causes a computer to execute a tire information acquisition step, a replacement time calculation step, and a replacement count calculation step. The tire information acquisition step acquires prediction data for remaining groove amount of the tire 7 mounted on each of a plurality of vehicles that are operated and managed. The replacement time calculation step calculates the time of replacement of each tire 7 from the prediction data for remaining groove amount acquired by the tire information acquisition step. The replacement count calculation step calculates the number of tire replacements in each period of time by tallying the times of replacement calculated by the replacement time calculation step for each predetermined period of time on the time axis. According to the tire maintenance support program, it is possible to calculate the number of tire replacements for each period of time and increase the work efficiency of maintenance planning.

In the tire maintenance support system 110, the replacement time calculation unit 32 calculates a time when at least one of the prediction data for tire groove depth of plurality grooves of the tire 7 indicates a value equal to or less than a threshold value of groove depth that requires tire replacement.

In the tire maintenance support system 110, the tire information acquisition unit 31 acquires information related to an amount of load on the tire 7, and the replacement time calculation unit 32 calculates a time of replacement of each tire 7 from prediction data on an amount of load acquired by the tire information acquisition unit 31.

The tire maintenance support program comprising computer-implemented modules including a tire information acquisition module, a replacement time calculation module, and a replacement count calculation module. The tire information acquisition module acquires prediction data for groove depth of a tire 7 mounted on each of a plurality of vehicles. The replacement time calculation module calculates a time of replacement of each tire 7 based on the prediction data for groove depth acquired by the tire information acquisition module. The replacement count calculation module calculates the number of tire replacements in each period of time by tallying times of replacement calculated by the replacement time calculation module for each period of time.

Described above is an explanation based on an exemplary embodiment. The embodiments are intended to be illustrative only and it will be understood by those skilled in the art that variations and modifications are possible within the claim scope of the present invention and that such variations and modifications are also within the claim scope of the present invention. Therefore, the description in this specification and the drawings shall be treated to serve illustrative purposes and shall not limit the scope of the invention.

31 tire information acquisition unit, 32 replacement time acquisition unit, 33 replacement count calculation unit, 34 display processing unit, 100 tire maintenance support apparatus

The present invention relates to a tire maintenance support apparatus and a tire maintenance support program.

## Claims

1. A tire maintenance support apparatus (100) comprising:
a tire information acquisition unit (31) that acquires prediction data for groove depth of a tire (7) mounted on each of a plurality of vehicles;
a replacement time calculation unit (32) that calculates a time of replacement of each tire (7) based on the prediction data for groove depth acquired by the tire information acquisition unit (31); and
a replacement count calculation unit (33) that calculates the number of tire replacements in each period of time by tallying times of replacement calculated by the replacement time calculation unit (32) for each period of time.

2. The tire maintenance support apparatus (100) according to claim 1, wherein
the replacement count calculation unit (33) calculates a replacement cost corresponding to the number of tire replacements tallied for each period of time.

3. The tire maintenance support apparatus (100) according to claim 1, wherein
the number of tire replacements is the minimum number that will result by using the tires (7) in rotation.

4. The tire maintenance support apparatus (100) according to claim 2, wherein
the replacement cost includes a cost incurred when a tire (7) currently mounted is replaced by a tire (7) having a different specification.

5. The tire maintenance support apparatus (100) according to any one of claims 1 through 4, further comprising:
a display processing unit (34) that displays, on a display unit (14), the numbers of tire replacements calculated by the replacement count calculation unit (33), organizing the numbers according to a period of time.

6. The tire maintenance support apparatus (100) according to claim 5, wherein
the display processing unit (34) displays identification information on the vehicle, on which the tire (7) for which the time of replacement has been calculated by the replacement time calculation unit (32) is mounted, and a position in an axle arrangement.

7. The tire maintenance support apparatus (100) according to any one of claims 1 through 6, wherein
the replacement time calculation unit (32) calculates a time when at least one of the prediction data for tire groove depth of plurality grooves of the tire (7) indicates a value equal to or less than a threshold value of groove depth that requires tire replacement.

8. The tire maintenance support apparatus (100) according to claim 1 or 2, wherein
the tire information acquisition unit (31) acquires information related to an amount of load on the tire (7), and
the replacement time calculation unit (32) calculates a time of replacement of each tire (7) from prediction data on an amount of load acquired by the tire information acquisition unit (31).

9. A tire maintenance support system (110) comprising:
a tire management server (80) comprising:
a tire wear amount calculation unit (83) that estimates, based on measurement information in a plurality of vehicles, a wear amount of a tire (7) mounted on each vehicle by using a learning-type arithmetic model (83a); and
a storage unit (85) that stores prediction data for groove depth of a tire (7) in the future, based on estimation by the tire wear amount calculation unit (83); and
a tire maintenance support apparatus (100) comprising:
a tire information acquisition unit (31) that acquires, from the tire management server (80), the prediction data for groove depth of a tire (7) mounted on each vehicle;
a replacement time calculation unit (32) that calculates a time of replacement of each tire (7) based on the prediction data for groove depth acquired by the tire information acquisition unit (31); and
a replacement count calculation unit (33) that calculates the number of tire replacements in each period of time by tallying times of replacement calculated by the replacement time calculation unit (32) for each period of time.

10. The tire maintenance support system (110) according to claim 9, wherein
the replacement count calculation unit (33) calculates a replacement cost corresponding to the number of tire replacements tallied for each period of time.

11. The tire maintenance support system (110) according to claim 9, wherein
the number of tire replacements is the minimum number that will result by using the tires (7) in rotation.

12. The tire maintenance support system (110) according to claim 10, wherein
the replacement cost includes a cost incurred when a tire (7) currently mounted is replaced by a tire (7) having a different specification.

13. The tire maintenance support system (110) according to any one of claims 9 through 12, further comprising:
a display processing unit (34) that displays, on a display unit (14), the numbers of tire replacements calculated by the replacement count calculation unit (33), organizing the numbers according to a period of time.

14. The tire maintenance support system (110) according to claim 13, wherein
the display processing unit (34) displays identification information on the vehicle, on which the tire (7) for which the time of replacement has been calculated by the replacement time calculation unit (32) is mounted, and a position in an axle arrangement.

15. The tire maintenance support system (110) according to claim 13, wherein
the display processing unit (34) displays, on the display unit (14), at least one of an amount of fuel reduced, fuel cost reduced, or amount of carbon dioxide emission reduced that results when a tire (7) currently mounted is replaced by a tire (7) having a different specification.
